# EUROPEAN PATENT APPLICATION

(11) **EP 4 814 260 A1**
(43) Date of publication of application: **30.09.2026**
(21) Application number: 26158278.7
(22) Date of filing: 12.02.2026
(51) Int. Cl.: F01D 5/28, B32B 18/00, C04B 35/80, C04B 35/634

(54) **MACHINED CERAMIC MATRIX COMPOSITE AIRFOIL PREFORM AND METHOD**

(30) Priority: 13.02.2025 US 202519053201
(71) Applicant: RTX Corporation, Farmington, CT 06032 (US)
(72) Inventor: KIM, Russel, Temecula, 92592 (US); BANHOS, Jonas, West Hartford, 06119 (US); ROACH, James T., Vernon, 06066 (US)
(74) Representative: Dehns

(57) **Abstract**

A ceramic matrix composite (CMC) airfoil component can be made by forming a stack of fabric plies with a plurality of plies adhered together with a tackifier. The stack of fabric plies is machined into an airfoil shape to form an airfoil core (220) with an orientation of the fabric plies selected based upon strength and/or performance requirements of the airfoil component. The airfoil core (220) is then overwrapped with an outer mold layer (230) formed of one or more plies of fabric to form a preform (200). The preform (200) is then densified, such as via melt infiltration (MI) and/or chemical vapor infiltration (CVI), to form the CMC airfoil component such as a turbine vane or a turbine blade.

## Description

### FIELD OF THE INVENTION

The subject matter disclosed herein relates to ceramic matrix composite (CMC) airfoils such as vanes for gas turbine components and, in particular, to a machined CMC preform for an airfoil.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (i.e., gaspath components). Therefore, it is desirable that such components be made of heat-resistant materials such as ceramic matrix composites (CMCs), which can withstand much higher operating temperatures than components composed of metal superalloys. Silicon Carbide (SiC) based CMCs fabricated via Chemical Vapor Infiltration (CVI), Melt Infiltration (MI), Polymer Infiltration and Pyrolysis (PIP), and hybrids of CVI/MI and CVI/PIP possess such high temperature capability. Such CMC components are typically fabricated from a near-net shape fiber preform, typically formed from fabric and tow layups.

However, airfoil shapes used in blades and vanes can be challenging to create and control within tolerances by solely folding fabric. The airfoil profiles, which may include features of camber, tapering, leading and trailing edge dimensions, are constantly changing. The fabric of a preform can exhibit distortion of tow orientation and wrinkling when trying to achieve conformity to these multiple features. Accordingly, post-densification machining of such CMC airfoils if often required.

The above information disclosed in this Background section is only for understanding of the background of the inventive concepts and, therefore, it may contain information that does not constitute prior art.

### SUMMARY OF THE INVENTION

The present disclosure is directed, in a first aspect, to a ceramic matrix composite (CMC) airfoil component that includes an airfoil core formed of a plurality of fabric plies that have been stacked and machined into an airfoil shape prior to densification, and an outer mold layer overwrap formed of one or more plies of fabric disposed to overwrap the airfoil core prior to densification.

In an example of the CMC airfoil component, the plurality of fabric plies that have been stacked may include a tackifier to hold the fabric plies together for machining.

In one example, the tackifier may be polyvinyl acetate (PVA), and in another embodiment, the tackifier may be polyvinyl butyral (PVB).

In a further example of the CMC airfoil component, an axis of the airfoil shape may be parallel to a plane of a ply in the stacked plurality of fabric plies.

In yet another example of the CMC airfoil component, an orientation of the ply in the stacked plurality of fabric plies relative to the airfoil shape may be selected based upon strength and/or performance requirements of the CMC airfoil component after densification.

In an example of the CMC airfoil component, an axis of the airfoil shape may be at an angle relative to a plane of a ply in the stacked plurality of fabric plies.

In another example of the CMC airfoil component with an axis of the airfoil shape at an angle relative to a plane of a ply in the stacked plurality of fabric plies, an orientation of the ply in the stacked plurality of fabric plies relative to the airfoil shape may be selected based upon strength and/or performance requirements of the airfoil component after densification.

In a further example of the CMC airfoil component, the CMC airfoil component may be for a turbine vane or a turbine blade.

The present disclosure is also directed, in a second aspect, to a method of forming a CMC airfoil component. The method includes stacking a plurality of fabric plies to form a stack of fabric plies, machining the stack of fabric plies into an airfoil shape to form an airfoil core, and overwrapping the airfoil core with an outer mold layer overwrap formed of one or more plies of fabric to form a preform.

In an example, the method may further include densifying the preform to form the CMC airfoil component.

In another example of the method, stacking the plurality of fabric plies may include adhering the fabric plies together with a tackifier.

In a further example of the method, the tackifier may be polyvinyl acetate (PVA).

In yet another example of the method, the tackifier may be polyvinyl butyral (PVB).

In an example of the method, during the machining, an axis of the airfoil shape may parallel to a plane of a ply in the stack of fabric plies.

In another example of the method, an orientation of the ply in the stack of fabric plies relative to the airfoil shape may be selected based upon strength and/or performance requirements of the CMC airfoil component after densifying the preform.

In a further example of the method, during machining, an axis of the airfoil shape may be at an angle relative to a plane of a ply in the stack of fabric plies, and in such cases, additional embodiments may include those wherein an orientation of the ply in the stacked plurality of fabric plies relative to the airfoil shape may be selected based upon strength and/or performance requirements of the airfoil component after densifying the preform.

The present disclosure is further directed, in a third aspect, to a further method of forming CMC airfoil component. The further method includes forming a stack of fabric plies by adhering a plurality of plies together with a tackifier, machining the stack of fabric plies into an airfoil shape to form an airfoil core with an orientation of the fabric plies selected based upon strength and/or performance requirements of the airfoil component, overwrapping the airfoil core with an outer mold layer formed of one or more plies of fabric to form a preform, and densifying the preform via melt infiltration (MI) and/or chemical vapor infiltration (CVI) to form the CMC airfoil component.

In an example of the further method, the tackifier may be polyvinyl acetate (PVA) or polyvinyl butyral (PVB), and the CMC airfoil component may be a turbine vane or a turbine blade.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1A schematically illustrates a perspective view of an example tackified ply stack in accordance with the present disclosure;
FIG. 1B schematically illustrates a perspective view of an example tackified ply stack after initial machining in accordance with the present disclosure;
FIG. 1C schematically illustrates a perspective view of an example tackified ply stack after further machining in accordance with the present disclosure;
FIG. 1D schematically illustrates a perspective view of an example tackified ply stack shaped as an airfoil after complete machining in accordance with the present disclosure;
FIG. 2 schematically illustrates a perspective view of an example airfoil preform or densified part in accordance with the present disclosure; and
FIG. 3 is a flow diagram of an example process in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure is directed to controlling tolerances of ceramic matrix composite (CMC) airfoil parts by utilizing machining methods earlier in the fabrication process. In accordance with the present disclosure, a plurality of fabric plies are stacked to form a stack of fabric plies. The stack of fabric plies are then machined into an airfoil shape to form an airfoil core. The airfoil core is then overwrapped with an outer mold layer overwrap formed of one or more plies of fabric to form a preform, which may then be densified.

While the illustrated examples and discussion below often make reference to an airfoil of a vane, it should be recognized that the present disclosure is not limited to vanes, but includes associated vane platforms and airfoils forming blades as well.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

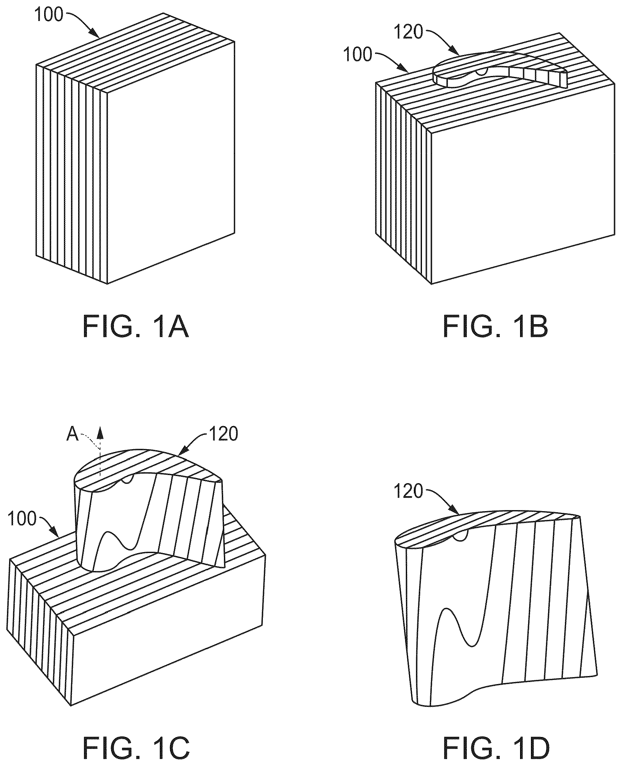

FIGS. 1A, 1B, 1C, and 1D illustrate various stages of forming an airfoil core 120 having a desired airfoil shape of a CMC airfoil component, such as for a vane for a gas turbine engine. While a turbine vane may also typically include an inner and outer platform, for purposes of illustration, these elements are omitted for clarity.

With reference to FIG. 1A, a plurality of fabric plies may be stacked together to form a stack of fabric plies 100. The fabric plies may include a tackifier, such as polyvinyl acetate (PVA) or polyvinyl butyral (PVB) in order to adhere the plurality of fabric plies together and form the stack of plies 100. In an embodiment, each ply of fabric, which may be formed from SiC fibers, includes the tackifier on one side thereof such that the stack of fabric plies 100 may be held together and have sufficient rigidity to be machined. When stacked, the planes of each of the fabric plies in the stack of fabric plies 100 may be parallel to each other. The size of the stack of fabric plies 100 should be sufficient to form a billet for machining the desired component.

With reference to FIGS. 1B and 1C, the stack of fabric plies 100 may be machined into a desired airfoil shape in order to form an airfoil core 120. In one or more embodiments of the present disclosure, an axis A of the airfoil core 120 may be aligned so as to be parallel with a plane of a fabric ply in the stack of fabric plies 100. In other embodiments, the axis A of the airfoil core 120 may be aligned so as to be at a selected angle relative to a plane of a fabric ply in the stack of fabric plies 100.

Additionally, an orientation of the fabric plies in the stack of fabric plies 100 relative to the airfoil shape of airfoil core 120 may be selected to provide desired strength and/or performance characteristics/requirements of a finished (i.e., densified) CMC airfoil component.

Machining the stack of fabric plies 100 forming the billet into the airfoil core 120 may be performed in any suitable manner, including but not limited to traditional milling and grinding, ultrasonic impact grinding, laser etching, water guided laser machining, and the like.

With reference to FIG. 1D, an airfoil core 120 having the desired airfoil shape may be formed upon completion of the machining. The machining process may provide greater control over the camber, tapering, leading edge, and trailing edge dimensions of airfoil core 120 than prior art airfoil shapes created by folding of fabric.

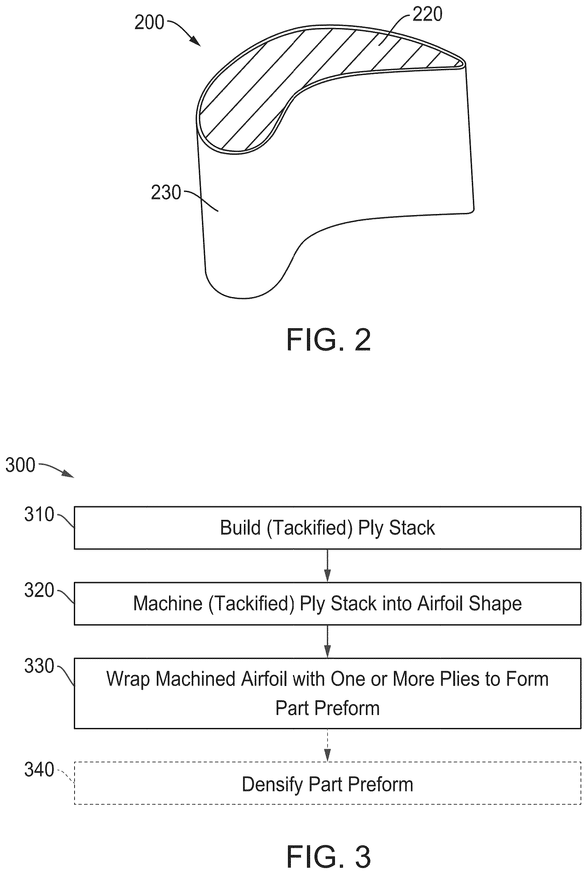

With reference to FIG. 2, a preform 200 for a CMC airfoil component may be formed by overwrapping an airfoil core 220 with an outer mold layer (OML) overwrap 230. OML overwrap 230 may include one or more overwrapped fabric plies that, together, wrap fully around the airfoil profile of airfoil core 220. OML overwrap 230 may also include a tackifier so as to adhere to airfoil core 220 and conform to concave portions thereof.

OML overwrap 230 provides reinforcement to the preform 200 by reinforcing airfoil core 220 in the interlaminar direction of the fabric plies (i.e., direction transverse to the fabric plies) forming airfoil core 220. OML overwrap 230 also provides protection to the exposed edges of the fabric plies and may smooth any minor surface imperfections on machined airfoil core 220.

The preform 200 of FIG. 2 may additionally include inner and outer platforms when the CMC airfoil component is a vane, or additional root and tip elements when the CMC airfoil component is a blade. Alternately, preform 200 may be attached to other preform elements and/or overwrap (not shown) forming inner and outer platforms of a vane or a root and tip of a blade.

With reference to FIG. 3, an embodiment of a method 300 of forming a CMC airfoil component is illustrated in a flow diagram.

A first step 310 of method 300 includes building a ply stack that will act as a billet for machining. In an embodiment, this step includes stacking a plurality of fabric plies to form a stack of fabric plies. In further embodiments of step 310, stacking the plurality of fabric plies may include adhering the fabric plies together with a tackifier so as to build a tackified ply stack. In various embodiments of the present disclosure, the tackifier material may be PVA or PVB. While PVA and PVB are included herein as exemplary tackifiers, embodiments in accordance with the present disclosure are not limited thereto, and any suitable tackifier substance may be used without departing from the present disclosure.

A next step 320 of method 300 includes machining the stack of fabric plies into an airfoil shape so as to form an airfoil core. The machining in step 320 may be performed in any suitable manner, including but not limited to traditional milling and grinding, ultrasonic impact grinding, laser etching, water guided laser machining, and the like.

In an embodiment, during the machining of step 320, an axis of the airfoil shape may be parallel to a plane of a ply in the stack of fabric plies. In another embodiment, during machining of step 320, an axis of the airfoil shape may be at an angle relative to a plane of a ply in the stack of fabric plies. In either of these embodiments, an orientation of the ply in the stacked plurality of fabric plies relative to the airfoil shape may be selected based upon strength and/or performance requirements of the airfoil component (after densifying the preform).

Method 300 continues with step 330, which includes overwrapping the airfoil core with an outer mold layer overwrap formed of one or more plies of fabric to form a preform for a CMC airfoil component (i.e., part preform).

In one or more embodiments of the present disclosure, method 300 may include a step 340 to densify the part preform, i.e., densifying the preform to form the CMC airfoil component. In one or more embodiments, step 340 may include densifying the preform via chemical vapor infiltration (CVI), melt infiltration (MI), polymer infiltration and pyrolysis (PIP), and hybrids of CVI/MI and CVI/PIP.

Accordingly, an embodiment of method 300 of forming a CMC airfoil component within the present disclosure may include forming a stack of fabric plies by adhering a plurality of plies together with a tackifier, machining the stack of fabric plies into an airfoil shape to form an airfoil core with an orientation of the fabric plies selected based upon strength and/or performance requirements of the airfoil component, overwrapping the airfoil core with an outer mold layer formed of one or more plies of fabric to form a preform, and densifying the preform via melt infiltration (MI) and/or chemical vapor infiltration (CVI) to form the CMC airfoil component.

In various embodiments of this embodiment of method 300, the tackifier may be polyvinyl acetate (PVA) or polyvinyl butyral (PVB), and the CMC airfoil component may be a turbine vane or a turbine blade.

Embodiments within the present disclosure provide numerous benefits, including but not limited to providing flexibility and greater control with respect to creating complex profiles and shapes, simplifying and reducing preform manufacturing lead times, and providing the ability to control orientation of fabric plies to meet strength and performance requirements of the resulting part. Embodiments in accordance with the present disclosure further reduce the challenges of folding fabric plies to conform to specific shapes.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A ceramic matrix composite (CMC) airfoil component, comprising:
an airfoil core (120; 220) formed of a plurality of fabric plies (100) that have been stacked and machined into an airfoil shape prior to densification; and
an outer mold layer overwrap (230) formed of one or more plies of fabric disposed to overwrap the airfoil core (120; 220) prior to densification.

2. The CMC airfoil component of claim 1, wherein the plurality of fabric plies (100) that have been stacked include a tackifier to hold the fabric plies (100) together for machining.

3. The CMC airfoil component of claim 1 or 2, wherein an axis (A) of the airfoil shape is parallel to a plane of a ply in the stacked plurality of fabric plies (100).

4. The CMC airfoil component of claim 3, wherein an orientation of the ply in the stacked plurality of fabric plies (100) relative to the airfoil shape is selected based upon strength and/or performance requirements of the CMC airfoil component after densification.

5. The CMC airfoil component of claim 1 or 2, wherein an axis (A) of the airfoil shape is at an angle relative to a plane of a ply in the stacked plurality of fabric plies (100).

6. The CMC airfoil component of claim 5, wherein an orientation of the ply in the stacked plurality of fabric plies (100) relative to the airfoil shape is selected based upon strength and/or performance requirements of the airfoil component after densification.

7. The CMC airfoil component of any preceding claim, wherein the CMC airfoil component is for a turbine vane or a turbine blade.

8. A method of forming a ceramic matrix composite (CMC) airfoil component, comprising:
stacking a plurality of fabric plies (100) to form a stack of fabric plies (100);
machining the stack of fabric plies (100) into an airfoil shape to form an airfoil core (120; 220); and
overwrapping the airfoil core (120; 220) with an outer mold layer overwrap (230) formed of one or more plies of fabric (100) to form a preform (200).

9. The method of claim 8, further comprising densifying the preform (200) to form the CMC airfoil component.

10. The method of claim 9, wherein stacking the plurality of fabric plies (100) includes adhering the fabric plies (100) together with a tackifier.

11. The method of claim 10 or CMC airfoil component of claim 2 or any of claims 3 to 7 as dependent on claim 2, wherein the tackifier is polyvinyl acetate (PVA).

12. The method of claim 10 or CMC airfoil component of claim 2 or any of claims 3 to 7 as dependent on claim 2, wherein the tackifier is polyvinyl butyral (PVB).

13. The method of any of claims 8 to 12, wherein during the machining, an axis (A) of the airfoil shape is parallel to a plane of a ply in the stack of fabric plies (100), optionally wherein an orientation of the ply in the stack of fabric plies (100) relative to the airfoil shape is selected based upon strength and/or performance requirements of the airfoil component after densifying the preform.

14. The method of any of claims 8 t0 12, wherein during machining, an axis (A) of the airfoil shape is at an angle relative to a plane of a ply in the stack of fabric plies (100).

15. The method of claim 10 or any of claims 11 to 14 as dependent on claim 10 directly or indirectly, wherein the densifying the preform (200) is via melt infiltration (MI) and/or chemical vapor infiltration (CVI) to form the CMC airfoil component,
optionally wherein the tackifier is polyvinyl acetate (PVA) or polyvinyl butyral (PVB) and the CMC airfoil component is a turbine vane or a turbine blade.
